Europäisches Patentamt

European Patent Office

Office européen des brevets

(11) Publication number: **0 422 246 A1**

# EUROPEAN PATENT APPLICATION
## published in accordance with Art. 158(3) EPC

(21) Application number: 90905673.1

(22) Date of filing: 07.04.90

(86) International application number:
PCT/JP90/00477

(87) International publication number:
WO 90/13071 (01.11.90 90/25)

(51) Int. Cl.5: **G05B 19/05**

(30) Priority: 26.04.89 JP 106685/89

(43) Date of publication of application:
17.04.91 Bulletin 91/16

(84) Designated Contracting States:
CH DE FR GB IT LI

(71) Applicant: FANUC LTD.
3580, Shibokusa Aza-Komanba, Oshino-mura
Minamitsuru-gun, Yamanashi 401-05(JP)

(72) Inventor: TANAKA, Kunio 5-8-13,
Tamagawacho

Akishima-shi
Tokyo 196(JP)
Inventor: SAIKI, Yoshiharu Fanuc Dai-3
Vira-karamatsu
3527-1, Shibokusa Oshinomura
Minamitsuru-gun
Yamanashi 401-05(JP)

(74) Representative: Brunner, Michael John et al
GILL JENNINGS & EVERY 53-64 Chancery
Lane
London WC2A 1HN(GB)

(54) PROGRAMMABLE CONTROLLER.

(57) A programmable controller constituted of a main processor (11) which executes the function instruction of sequence program and the control program (12a), and a bit operation controller (17) which executes the basic instruction of the sequence program. The bit operation controller (17) includes a register (17a) that stores signal conditions of predetermined signals, and a condition detector circuit (17b). The signal condition of the condition detector circuit (17b) that satisfies a condition set by a particular function instruction, is sent to the main processor (11), in order to send an interrupt signal for executing the particular function instruction. Then, the function instruction processes the signal condition without waiting time.

Fig. 1

## PROGRAMMABLE CONTROLLER

TECHNICAL FILED

The present invention relates to a programmable controller comprising a main processor for executing a function command of a sequence program and a management program, and a bit operation controller for executing a basic command of the sequence program, and more specifically, to a programmable controller which can process the function command without a waiting time.

BACKGROUND ART

Programmable controllers are widely used in machine tools, production machines and the like, and in particular, due to the recent growing complexity of the machines employing the programmable controllers, the programmable controllers are required to process more I/O signals at higher speeds.

To cope with this requirement, a programmable controller having two processors is used. More specifically, a first processor is used as a main processor for executing a command for a complex function (hereinafter, referred to as a function command), such as calculations, jumps, detection of conditions and the like in addition to controlling the operation of the programmable controller as a whole, and a second processor is used as a bit operation controller (hereinafter, referred to as a BOC) and processes commands for logical operations, such as OR, AND, and the like (hereinafter, referred to as a basic command), at a high speed.

Further, since a larger number of sequence programs are to be processed, the sequence program is divided into a plurality of levels which are alternately processed at predetermined intervals.

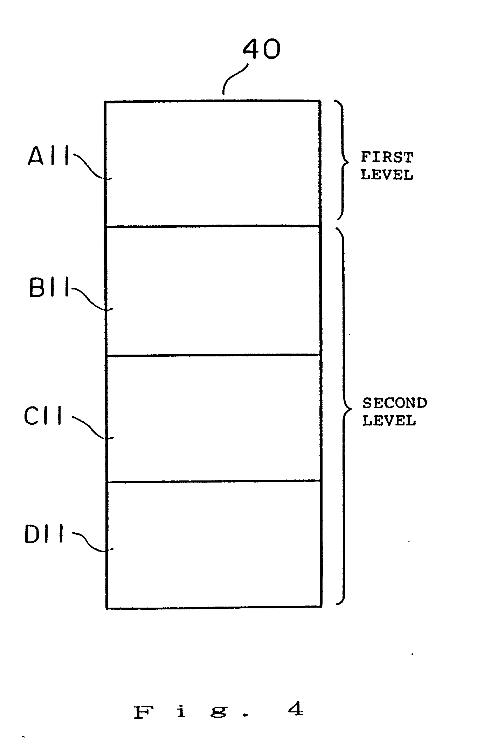

Figure 4 is a conceptual view of this kind of the sequence program, wherein a sequence program 40 is divided into a first level and a second level: the first level is used to process a program A11, which must be relatively urgently processed, and the second level is used to process a usual program, which is divided into three programs B11, C11, and D11.

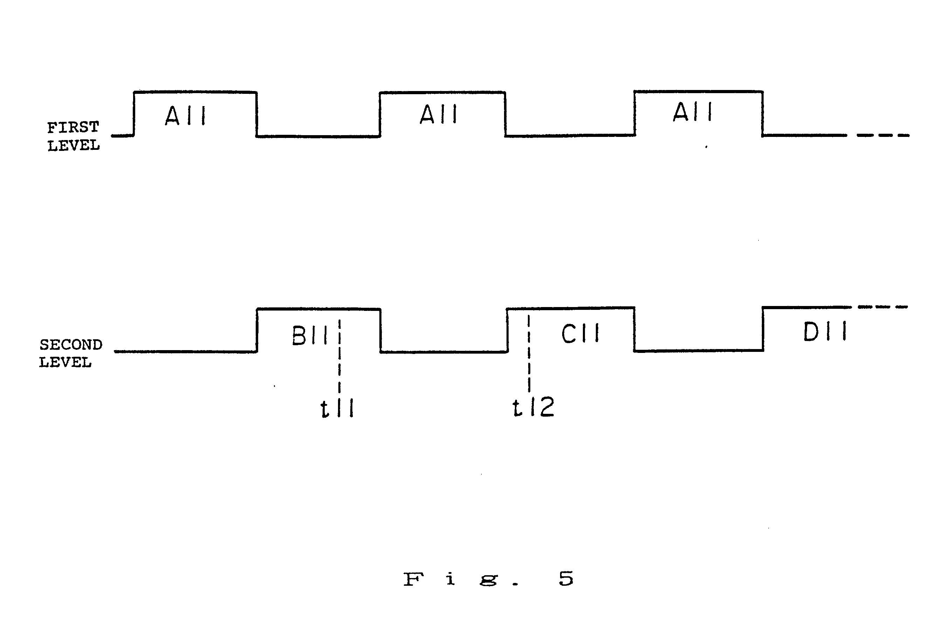

Figure 5 is a processing time chart for the programmable controller used when the sequence program 40 is executed wherein, after the entire program A11 of the first level has been processed within a predetermined time, only the program B11 of the second level is processed. Thereafter, the entire sequence program 40 is processed in the sequence of the program A11, the program C11, the program A11, and the program D11.

Nevertheless, when, for example, a command for a predetermined signal processing to be executed by the BOC exists in the program B11 and a function command based on the above signal exists in the program C11, the function command cannot be immediately executed based on an actual signal state. More specifically, even if the signal state satisfies the conditions of the function command at a time t11, the main processor actually inputs this signal at a time t12, because whether or not the conditions are satisfied must be determined before the function command is executed, and thus the execution of the function command is delayed.

DISCLOSURE OF THE INVENTION

Taking the above into consideration, an object of the present invention is to provide a programmable controller which can process a function command without a waiting time.

To solve the above problem, according to the present invention, there is provided a programmable controller, which comprises a main processor for executing a function command of a sequence program and a management program, and a bit operation controller for executing a basic command of the sequence program, wherein a register is contained in the bit operation controller for storing a signal state of a predetermined signal, and a condition detection circuit is contained in the bit operation controller, for detecting whether the signal state satisfies the conditions set by a specific function command and supplying an interrupt signal and the signal state to the main processor, to thereby cause the main processor to execute the specific function command.

The bit operation controller monitors the signal state, and when the predetermined conditions of the function signal are satisfied, the bit operation controller outputs the interrupt signal and the signal state, to thereby cause the main processor to preferentially execute the function command.

BRIEF DESCRIPTION OF THE DRAWINGS

Figure 1 is a block diagram of hardware of a programmable controller of an embodiment according to the present invention;

Figure 2 is a conceptual view of a sequence program;

Figure 3 is a processing time chart of a programmable controller according to an embodiment of the present invention;

Figure 4 is a conceptual program of a sequence program;

Figure 5 is a processing time chart of a conventional programmable controller.

BEST MODE OF CARRYING OUT THE INVENTION

An embodiment of the present invention will be described below with reference to the drawings.

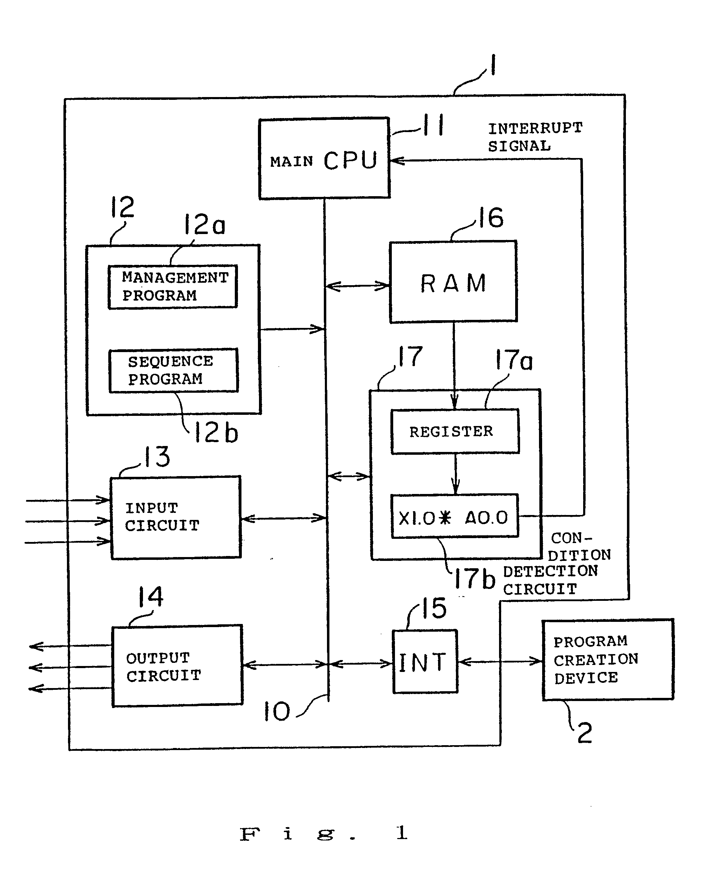

Figure 1 is a block diagram of hardware of a programmable controller of an embodiment according to the present invention, wherein a main processor 11 reads out a management program 12a in a ROM 12 and controls the entire operation of the programmable controller 1 according to the management program 12a, and further, executes a function command in a sequence program 12b.

The ROM 12 stores the management program 12a, and the sequence program 12b programmed by a ladder language. An input circuit 13 receives a signal from the outside, converts a signal level thereof, and inputs the signal to a bus 10: an output circuit 14 outputs an internal output signal to the outside: an interface 15 connects the bus 10 to a program creation device 2; and a RAM 16 composed of a DRAM transfers the sequence program 12b from the ROM 12, after a power supply has been switched on.

A bit operation controller 17 executes only a basic command in the sequence program 12b, such as OR, AND and the like, by bit units at a high speed. Further, the bit operation controller 17 contains a register 17a and a condition detection circuit 17b. The register 17a is supplied with the signal states of respective contacts and coils from the RAM 16 while the program is executed, and the condition detection circuit 17b monitors whether the signal state stored in the register 17a satisfies the conditions set by a predetermined function command: when the conditions are satisfied, the condition detection circuit 17b supplies an interrupt signal to the main processor 11.

Upon receiving the interrupt signal, the main processor 11 interrupts the operation of the bit operation controller 17, receives the signal state from the condition detection circuit 17b, and immediately executes the predetermined function command. When the function command has been executed, the bit operation controller 17 is restarted to continue the processing.

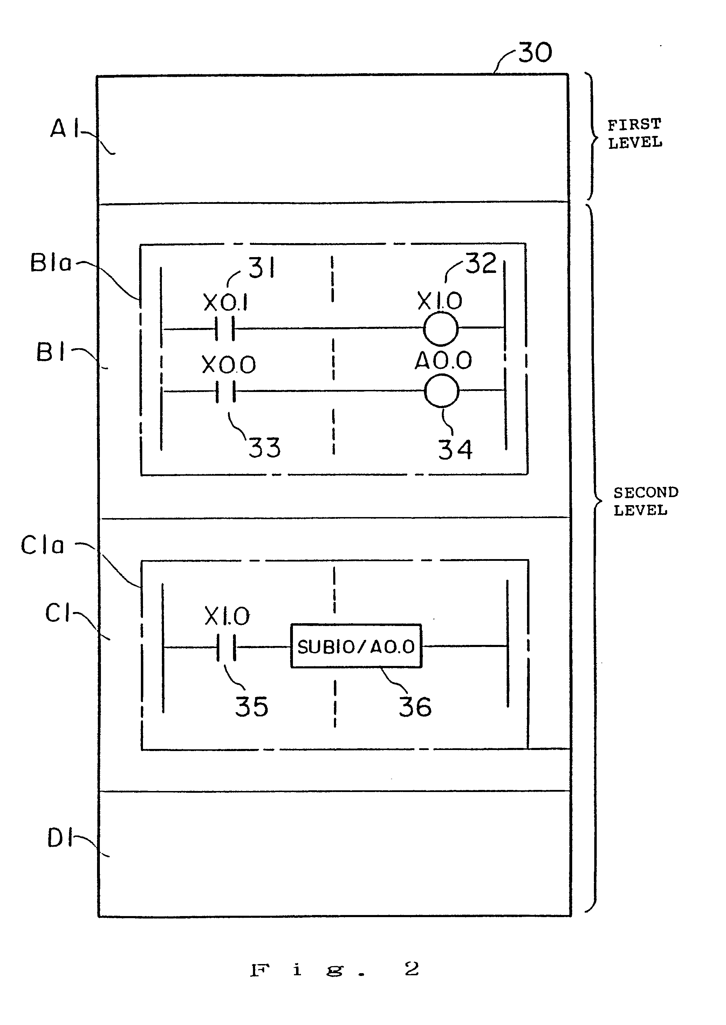

Figure 2 is a conceptual view of the sequence program to be executed by the programmable controller, wherein a sequence program 30 is divided into a first level and a second level. The first level is used to process a program A1, which must be relatively urgently processed, and the second level is used to process a usual program, which is divided into three programs B1, C1, and D1.

The program B1 includes a program B1a, which turns on contacts 31 and 33 to turn on coils 32 and 34, and the program C1 includes a program C1a concerning a function command 36. The function command 36 can be executed when a contact 35 is turned on, i.e, when the coil 32 is turned on. Further, when the coil 34 is turned on, the function command 36 detects same and outputs an alarm signal.

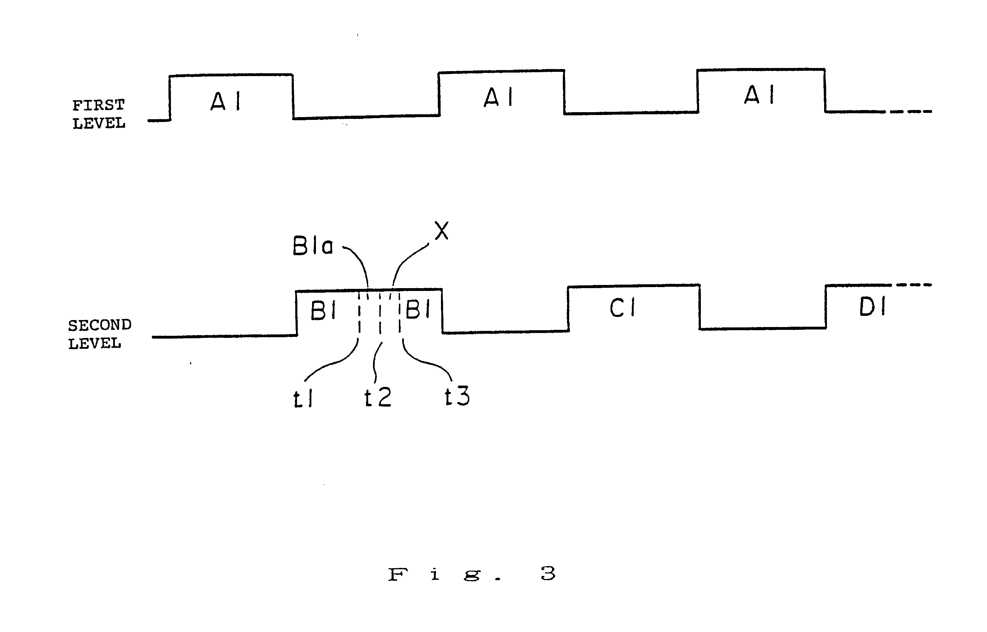

Figure 3 is a processing time chart of the programmable controller 1 used when the sequence program 30 is executed wherein, after the entire program A1 of the first level has been processed within a predetermined time, the processing of the program B1 of the second level is started. Then, the program B1a is executed from a time t1 to a time t2, and when the signal state satisfies the conditions set by the function command 36, as a result of this execution, the function command is immediately executed by the interruption (program X) and terminated at a time t3, and thereafter the remaining portion of the program B1 is executed. Next, the program A1 is executed, and then the entire sequence program 30 is processed in the sequence of the program C1, the program A1, and the program D1.

Note, although the program created by the ladder language is used as the sequence program in the above description, the present invention can be applied to a sequence program using other languages.

As described above, according to the present invention, the bit operation controller monitors a signal state, and when the conditions of a predetermined function command are satisfied, an interrupt signal and a signal state are output to the main processor to cause the main processor to preferentially execute the function command, and thus the function command can be executed based on an actual signal state without a waiting time, and thus the control of the programmable controller can be improved.

Claims

1. A programmable controller comprising a main processor for executing a function command of a sequence program and a management program, and a bit operation controller for executing a basic command of the sequence program, comprising:

a register contained in said bit operation controller for storing a signal state of a predetermined signal; and

a condition detection circuit contained in said bit operation controller for detecting whether said signal state satisfies conditions set by a specific function command and supplying an interrupt signal and said signal state to said main processor to thereby cause said main processor to execute said specific function command.

F i g . 1

F i g . 2

Fig. 3

40

AII

BII

CII

DII

FIRST LEVEL

SECOND LEVEL

F i g . 4

FIRST
LEVEL

AII   AII   AII

SECOND
LEVEL

BII   CII   DII

$t_{11}$   $t_{12}$

Fig. 5

# INTERNATIONAL SEARCH REPORT

International Application No PCT/JP90/00477

## I. CLASSIFICATION OF SUBJECT MATTER (if several classification symbols apply, indicate all) [6]

According to International Patent Classification (IPC) or to both National Classification and IPC

Int.Cl[5]    G05B19/05

## II. FIELDS SEARCHED

### Minimum Documentation Searched [7]

| Classification System | Classification Symbols |
|---|---|
| IPC | G05B19/05 |

Documentation Searched other than Minimum Documentation
to the Extent that such Documents are Included in the Fields Searched [8]

| | |
|---|---|
| Jitsuyo Shinan Koho | 1932-1990 |
| Kokai Jitsuyo Shinan Koho | 1971-1990 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 63-238601 (Matsushita Electric Works, Ltd.) 4 October 1988 (04.10.88)  (Family: none) | 1 |
| Y | JP, A, 63-214804 (Fanuc Ltd.) 7 September 1988 (07. 09. 88) (Family: none) | 1 |
| A | JP, A, 59-65310 (Mitsubishi Electric Corporation) 13 April 1984 (13. 04.84) (Family: none) | 1 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance: the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search | Date of Mailing of this International Search Report |
|---|---|
| July 2, 1990 (02.07.90) | July 16, 1990 (16.07.90) |
| International Searching Authority | Signature of Authorized Officer |
| Japanese Patent Office | |

Form PCT/ISA.210 (second sheet) (January 1985)